# EUROPÄISCHE PATENTSCHRIFT

(11) **EP 3 464 067 B1**
(45) Veröffentlichungstag und Bekanntmachung des Hinweises auf die Patenterteilung: **23.11.2022**
(21) Anmeldenummer: 17728492.4
(22) Anmeldetag: 31.05.2017
(51) Int. Cl.: B64D 11/06

(54) **PASSAGIERSITZSYSTEM FÜR EINE KABINE EINES TRANSPORTMITTELS**
PASSENGER SEAT SYSTEM FOR A CABIN OF A MEANS OF TRANSPORTATION
SYSTÈME DE SIÈGE DE PASSAGER POUR UNE CABINE D'UN MOYEN DE TRANSPORT

(30) Priorität: 31.05.2016 DE 102016110057
(43) Veröffentlichungstag der Anmeldung: 10.04.2019
(73) Patentinhaber: Airbus Operations GmbH, 21129 Hamburg (DE)
(72) Erfinder: WOLGAST, Carsten, 21129 Hamburg (DE)
(74) Vertreter: LKGLOBAL Lorenz & Kopf PartG mbB Patentanwälte
(86) Internationale Anmeldenummer: PCT/EP2017/063153
(87) Internationale Veröffentlichungsnummer: WO 2017/207626

(56) Entgegenhaltungen:
- EP-A2- 0 463 757
- WO-A1-2016/049356
- US-A1- 2015 145 300

## Beschreibung

### TECHNISCHES GEBIET

Die Erfindung betrifft ein Passagiersitzsystem für eine Kabine eines Transportmittels, eine Kabine mit mindestens einem solchen Sitzsystem sowie ein Flugzeug mit einer derartigen Kabine.

### HINTERGRUND DER ERFINDUNG

Üblicherweise werden in Fahrzeugen, die dem Transport von Passagieren dienen, Passagiersitze und andere Einrichtungen an Fußbodenschienen befestigt, welche in einem bestimmten Raster angeordnete Befestigungsmittel besitzen. Durch das Raster können unterschiedliche Befestigungspositionen an den Fußbodenschienen realisiert werden. Eine Befestigung des betreffenden Objekts an einer gewünschten Position erfolgt üblicherweise durch eine Arretiereinrichtung, welche langfristig eine form- und/oder kraftschlüssige Arretierung mit Befestigungsmitteln an einer Position der Fußbodenschiene durchführt.

Zudem ist bekannt, insbesondere in Flugzeugen je nach Wunsch oder temporärer Anforderung einen Abstand zwischen in einer Längsrichtung aufeinanderfolgenden Sitzen zu bestimmen und gegebenenfalls gelegentlich oder regelmäßig, je nach Machbarkeit aus zulassungsrechtlicher und zeitlicher Hinsicht, zu ändern. Dazu werden die Arretiereinrichtungen betreffender Sitze gelöst, anschließend werden die Sitze entlang der Fußbodenschiene verschoben und die Arretiereinrichtungen werden wieder arretiert. Das Ändern des Abstands insbesondere zwischen zwei hintereinander angeordneten Passagiersitzen kann die Bestuhlungsklasse des betreffenden Abschnitts in der Passagierkabine ändern.

DE 10 2009 004 987 B4 zeigt einen verschiebbaren Sitz für ein Transportmittel, mit einem Sitzgestell zum verschiebbaren Anbringen an einer Trägerstruktur des Transportmittels, wobei der Sitz derart ausgeführt ist, dass zwei im Transportmittel hintereinander angeordnete Sitze in einem zusammen- und zumindest teilweise ineinandergeschobenen Lagerzustand eine geringere gemeinsame Grundfläche aufweisen als in einem auseinandergeschobenen Benutzungszustand.

DE 10 2013 103 662 A1 zeigt eine Haltevorrichtung zum Befestigen von Passagiersitzen in einem Transportmittel, die ein Sitzbeinfixierelement, ein Gleitelement und ein Schienenelement aufweist.

WO 2016/049356 A1 zeigt einen Flugzeugsitz mit einem längsverschiebbaren Sitzgestell und Bewegungsschienen, die mit einer Schiene in einem Fußboden verbunden sind.

US 2015/145300 A1 offenbart eine Passagiersitzanordnung für eine Flugzeugkabine, bei der die Passagiersitze individuell und abhängig von der Körpergröße des jeweiligen Passagiers längsverschiebbar sind.

EP 0 463 757 A2 eine Passagiersitzanordnung für ein Flugzeug, bei der Passagiersitze in zwei unterschiedlichen Positionen an einer Fußbodenschiene arretierbar sind, wofür Arretierkörper vorgesehen sind, die in Rasteröffnungen einer Fußbodenschiene eintauchen können und durch einen Hebel bewegbar sind.

Der Hebel ist an einem Beschlag verschwenkbar angeordnet, der mit der Fußbodenschiene verbunden werden kann. Ein Nocken am Hebel ist mit einem Langloch in einem senkrechten Teil des Sitzgestells im Eingriff. Durch Verschwenkung des Hebels kann der Passagiersitz zwischen den zwei Positionen bewegt werden.

### ZUSAMMENFASSUNG DER ERFINDUNG

Die Aufgabe der Erfindung liegt darin, eine Anordnung oder einen Passagiersitz zur Verbesserung einer raschen Rekonfiguration einer Kabine eines Transportmittels ohne Beeinträchtigung des Passagierkomforts vorzuschlagen.

Es wird ein Passagiersitzsystem für eine Kabine eines Transportmittels vorgeschlagen, aufweisend mehrere hintereinander angeordnete Passagiersitze mit jeweils einem Sitzgestell, das einen Aufnahmeabschnitt zur Aufnahme von Sitzeinrichtungen besitzt und mehrere Tragelemente zur Kopplung mit einem Fußboden aufweist und für jeden Passagiersitz mindestens eine von dem Aufnahmeabschnitt beabstandete positionsvariable Einrichtung zum Koppeln eines Tragelements mit einer Sitzschiene, mit einer Basis und einer Haltevorrichtung, die lösbar an der Basis befestigbar ist und mit einem Tragelement des Sitzgestells koppelbar ist. Die Basis weist eine Auflagefläche zum Auflegen auf die Sitzschiene in der Kabine des Transportmittels und mindestens eine Arretiereinrichtung zum Arretieren der Basis an der Sitzschiene auf. Die Basis weist eine Aufnahmeeinrichtung zur lösbaren Aufnahme der Haltevorrichtung auf. Die positionsvariable Einrichtung ist dazu ausgebildet, die Haltevorrichtung selektiv in einer ersten Position oder einer zweiten Position an der Aufnahmeeinrichtung zu arretieren oder zu lösen und bei gelöster Haltevorrichtung eine Bewegung der Haltevorrichtung zwischen der ersten Position und der zweiten Position zu erlauben.

Das erfindungsgemäße Passagiersitzsystem dient dazu, einen oder mehrere Passagiersitze auszubilden, die dazu befähigt sind, bedarfsweise an zwei unterschiedlichen Positionen in einer Längsrichtung der Kabine entlang der Sitzschiene, also der ersten oder zweiten Position, befestigt zu werden. Die wahlweise Positionierung ermöglicht, bedarfsweise die Abstände zwischen Passagiersitzen in der Längsrichtung aufzuweiten oder zu verringern. Der Begriff "Passagiersitz" muss dabei nicht zwangsläufig ausschließlich einen einzelnen Sitz betreffen, sondern kann auch eine Passagiersitzreihe mit mehreren Einzelsitzen nebeneinander auf einem gemeinsamen Sitzgestell bezeichnen. Die hierzu im Sinne der Erfindung erforderlichen Merkmale der Kernkomponenten werden nachfolgend erörtert.

Ein Sitzgestell ist ein sehr robuster Rahmen zur Aufnahme von Sitzflächen und Rückenlehnen und bildet ein Grundgerüst für einen Sitz bzw. eine Sitzreihe. Exemplarisch weist ein Sitzgestell zwei Gruppen aus je einem vorderen Sitzbein, einem hinteren Sitzfuß und einer dazwischen verlaufenden Diagonalstrebe auf, wobei jede Gruppe dieser Komponenten eine zu einem Kabinenfußboden vertikal verlaufende Fläche aufspannt. Die beiden Gruppen sind voneinander beabstandet und tragen gemeinsam ein vorderes und ein hinteres Tragrohr, welche von einem Kabinenfußboden beabstandet zur Aufnahme von Sitzpolstern und zur Aufnahme einer insbesondere schwenkbaren Rückenlehne dienen. Die Sitzgestelle werden üblicherweise derart robust ausgeführt, dass die gesamten Gewichts- und Massekräfte von darauf sitzenden Personen über das Sitzgestell in die das Sitzgestell tragenden Sitzschienen geleitet werden, wobei zulassungsrelevante Lastfaktoren zu berücksichtigen sind. Selbstverständlich können Sitzgestelle für bestimmte Transportmittel auch völlig abweichend von dieser Art gestaltet werden. Sämtlichen Sitzgestellen sollte jedoch gemein sein, dass Tragelemente vorhanden sind, die einen Aufnahmeabschnitt tragen, auf dem dann die eigentlichen, mit einem Passagier in Berührung geratenden Komponenten getragen werden. Ein Aufnahmeabschnitt kann beispielsweise durch die genannten Tragrohre, daran angeordneten Befestigungsmitteln oder durch andere geeignete Einrichtungen bereitgestellt werden.

Eine positionsvariabel bezeichnete Einrichtung kann aus zwei zusammenhängenden Komponenten bestehen, die dazu befähigt sind, ein Tragelement mechanisch mit der Sitzschiene zu koppeln. Die Kopplung erfolgt positionsvariabel durch eine fest an bzw. in der Sitzschiene positionierte Basis der Einrichtung und die daran an einer von zwei durch die Basis bestimmten Positionen arretierte Haltevorrichtung. Unabhängig von der Art der Ausführung der Basis und der Ausgestaltung der Haltevorrichtung soll damit eine bedarfsweise Verschiebung bzw. Bewegung des betreffenden Passagiersitzes zwischen zwei Positionen ermöglicht werden, ohne dass die Sitzschiene selbst hierfür ausgelegt sein oder entsprechende Mittel aufweisen muss. Besonders vorteilhaft ist die positionsvariable Einrichtung ein integraler Bestandteil eines Passagiersitzes, um lediglich durch Integration des betreffenden Passagiersitzes in ein Transportmittel mit herkömmlichen Sitzschienen eine rasche Änderung einer Konfiguration zu ermöglichen. Modifikationen an dem Transportmittel oder den darin befindlichen Sitzschienen sind nicht erforderlich.

Die Basis sowie die Haltevorrichtung können sich auch in Form von separaten Bauteilen an unterschiedlichen Positionen des betreffenden Sitzgestells erstrecken. Beispielsweise könnte ein Teil des Sitzgestells entlang der Sitzschiene bewegbar gelagert werden und ein anderer Teil des Sitzgestells könnte in zwei diskreten Positionen an der Sitzschiene befestigbar sein.

Es könnte folglich auch denkbar sein, bereits vorhandene Passagiersitze durch Kopplung mit einer solchen positionsvariablen Einrichtung nachzurüsten, um sämtliche damit verbundenen Vorteile nutzen zu können. Die an einem üblichen Sitzgestell vorhandenen oder damit verbundenen Haltevorrichtungen können durch eine positionsvariable Einrichtung ersetzt werden oder die Basis einer positionsvariablen Einrichtung kann derart ausgeführt sein, dass eine herkömmliche Haltevorrichtung damit kombinierbar ist. Zum Ausgleich einer durch die positionsvariable Einrichtung erlangten Höhenänderung des Sitzgestells und damit des Schwerpunkts einer Kombination aus Passagiersitz und Passagier könnte es aus zulassungsrelevanten Gründen notwendig sein, die Höhe des Sitzgestells anzupassen.

Die rasche Umkonfigurierbarkeit einer Passagiersitzanordnung durch Passagiersitze, welche mit Hilfe des erfindungsgemäßen Passagiersitzsystem aufgebaut sind, äußert sich in der einfachen Realisierbarkeit variabler Sitzabstände. Ist etwa das Passagieraufkommen in dem betreffenden Transportmittel gering, könnten die Sitzabstände vergrößert werden, so dass die Passagiere einen erhöhten individuellen Komfort erfahren. Dabei werden sukzessive die Passagiersitze von einer jeweils individuellen ersten Position in eine individuelle zweite Position verschoben, so dass der Abstand zu dem jeweils davor oder dahinter befindlichen Passagiersitz um eine bestimmte Strecke vergrößert wird. Die durch die jeweilige Basis zu realisierende Verschieb- bzw. Bewegbarkeit hängt indes von der Ordnungszahl des betreffenden Passagiersitzes in der betreffenden Gruppe ab. Ausgehend von einem ersten Passagiersitz in der Gruppe wird die durch die Basis erlaubte Verschiebungs- bzw. Bewegungsstrecke, die die Distanz zwischen der ersten Position und der zweiten Position ist, für jeden entlang der Sitzschiene positionierten Passagiersitz sukzessive um eine Aufweitungsstrecke vergrößert. Die Aufweitungsstrecke bezeichnet hierbei die Differenz zwischen einem ersten Sitzabstand und einem zweiten Sitzabstand. Mögliche Ausgestaltungen zur Erreichung dieses Ziels werden weiter nachfolgend erörtert.

Insgesamt führt das erfindungsgemäße Passagiersitzsystem folglich dazu, eine leicht nachrüstbare und sehr flexible Lösung bereizutstellen, die variable Sitzabstände in einer Passagierkabine eines Transportmittels und insbesondere eines Verkehrsflugzeugs erlaubt.

Die Basis weist ein erstes Ende und ein zweites Ende auf, an denen jeweils ein Anschlag zum Definieren der ersten Position und der zweiten Position vorhanden ist. Das Verschieben von Passagiersitzen zur schnellen Umkonfigurierung, beispielsweise direkt zwischen zwei Einsätzen des Transportmittels, kann von Bordpersonal erledigt werden. Insbesondere bei größeren Transportmitteln, zum Beispiel Verkehrsflugzeugen, sind hierbei viele Passagiersitze in kurzer Zeit zu verschieben. Für die Aufweitung oder Verringerung von Sitzabständen sollten die Passagiersitze gruppenweise verschoben werden, wobei jeder Passagiersitz einer solchen Gruppe aufgrund der sich fortsetzenden Addition von Aufweitungsstrecken um eine andere Wegstrecke verschoben werden. Bei nicht regelmäßiger Änderung von Sitzabständen könnte Bordpersonal die entsprechende Routine zur Überprüfung der einzustellenden Endpositionen der einzelnen Sitze stets geprüft werden. Durch die Integration von Endanschlägen an jeder individuellen Basis wird das Verschieben für Bordpersonal deutlich erleichtert, denn beim Erreichen eines Endanschlages wird nicht nur eine exakte Endposition erreicht, sondern auch dem jeweiligen Benutzer eine klare, haptische Rückmeldung gegeben.

Die Aufnahmeeinrichtung der Basis könnte ein Schienensegment aufweisen, wobei die Haltevorrichtung zum flächenbündigen Anordnen auf dem Schienensegment ausgebildet ist. Das Schienensegment kann sowohl als eine "Douglas-Rail" oder eine ähnliche Bauart ausgeführt sein, oder in Form einer Gleitschiene, an der die Haltevorrichtung zwischen der ersten und der zweiten Position gleiten kann. Die Ausgestaltung der Basis kann sich folglich auf ein Schienensegment beschränken, welches bevorzugt an beiden Enden einen Endanschlag aufweist.

In einer besonders vorteilhaften Ausführungsform weist das Schienensegment einen eine Hinterschneidung aufweisenden Profilquerschnitt auf, wobei die Haltevorrichtung eine korrespondierend geformte Ausnehmung besitzt. Die mindestens eine Hinterschneidung kann sich an Seitenflächen des Schienensegments und bevorzugt symmetrisch an beiden Seitenflächen des Schienensegments entlang der Schiene erstrecken, so dass mit der Ausnehmung der Haltevorrichtung eine Art Schwalbenschwanzführung resultiert. Damit wird verhindert, dass die Haltevorrichtung von dem Schienensegment abgehoben wird, so dass zum Arretieren der Haltevorrichtung an der Basis lediglich die Verwendung eines in eine Rastöffnung des Schienensegments ragenden Stifts oder dergleichen ausreicht. Die Verschiebung des jeweiligen Passagiersitzes wird hierdurch besonders einfach und sowohl das Lösen als auch das Arretieren des Passagiersitzes in der erreichten Position wird deutlich erleichtert.

In diesem Zusammenhang ist vorstellbar, dass das Schienensegment lediglich an seinen Enden in der ersten Position und in der zweiten Position entsprechende Rastöffnungen besitzt, so dass eine fehlerhafte Positionierung und Arretierung des Passagiersitzes ausgeschlossen wird.

Im Sinne des abhängigen Anspruchs 5 ist die Gelenkstange wie eine Pendelstütze realisiert, die entweder zu der ersten Position oder zu der zweiten Position geklappt und dort bevorzugt arretiert wird. Die Position der Gelenkstange ist stets präzise definiert und eine Fehlarretierung ist nicht möglich. Für die einzelnen Passagiersitze in einer größeren Gruppe von Passagiersitzen sind die Gelenkstangen in ihrer Länge an die individuellen Verschiebewege anzupassen.

Sowohl ein vorderer Teil des Sitzgestells kann mit einer solchen Gelenkstange ausgestattet sein als auch ein hinterer Teil. Bevorzugt sind entweder zwei benachbarte vordere Sitzbeine oder zwei hintere Sitzfüße mit einer solchen Gelenkstange ausgestattet, während die jeweils andere Seite des Sitzgestells entlang der Sitzschiene geführt werden kann. Insbesondere bietet es sich an, die vorderen Sitzbeine jeweils mit einer Gelenkstange auszustatten und die hinteren Sitzfüße verschiebbar mit der Sitzschiene zu koppeln, um das Kippen um die Gelenkstange durch Ausnutzen eines Hebelarms zu unterstützen, der durch die Rückenlehne des Sitzes auf dem betreffenden Sitzgestell bereitgestellt wird.

In diesem Sinne kann die positionsvariable Einrichtung auch in Form einer Führung in der Sitzschiene realisiert sein, während die Haltevorrichtung durch die Gelenkstange realisiert wird und die Sitzschiene selbst, darauf aufbringbare oder aber darin integrierbare Komponenten als Basis im Sinne der Erfindung fungieren.

Die Arretiereinrichtung der Basis könnte zweite Arretiermittel aufweisen, die dazu ausgebildet sind, mit der Sitzschiene eine form- und/oder kraftschlüssige Verbindung einzugehen. Je nach Ausführung der Sitzschiene sind die zweiten Arretiermittel entweder als pilzartige Arretiermittel mit einem Schaft ausgeführt, die entlang des Schafts senkrecht zu dem Kabinenfußboden bewegbar sind, etwa bei Verwendung einer "Douglas-Rail" oder in Form von Stiften, die in Rastöffnungen der Schiene einführbar sind, falls stattdessen Gleitschienen Verwendung finden. Es ist unbedingt erforderlich, dass die Basis ausreichend fest mit der Sitzschiene verbunden wird, da hierüber sämtliche Lasten des betreffenden Passagiersitzes in die Sitzschiene eingeleitet werden. Die zweiten Arretiermittel können bewährten Arretiermitteln entsprechen, die für die direkte Verbindung von Passagiersitzen und Sitzschienen Verwendung finden.

Vorteilhaft weist das Sitzgestell vier Tragelemente auf, denen jeweils eine eigene positionsvariable Einrichtung zugeordnet ist. Diese vier Tragelemente können zwei vordere Sitzbeine und zwei hintere Sitzfüße umfassen, welche die gesamten Auflagepunkte des Sitzgestells bilden. Die individuelle Ausstattung jedes Tragelements mit einer positionsvariablen Einrichtung kann insgesamt das Gewicht eines Passagiersitzes minimieren, da die hierfür notwendigen positionsvariablen Einrichtungen die geringstmögliche Größe aufweisen können.

Das Passagiersitzsystem kann mindestens eine Gruppe von Passagiersitzen aufweisen. Der Abstand zwischen der ersten Position und der zweiten Position der mindestens einen positionsvariablen Einrichtung wird für jeden Passagiersitz der Gruppe um ein Vielfaches einer Strecke erhöht, die einer vorbestimmten Sitzabstandsaufweitung der Gruppe von Passagiersitzen entspricht, wobei das jeweilige Vielfache einer Ordnungszahl des betreffenden Passagiersitzes in der Gruppe entspricht. Wird eine Gruppe von Passagiersitzen einer Sitzabstandsaufweitung unterzogen, werden die Sitzabstände zwischen zwei hintereinander angeordneten Passagiersitzen um eine bestimmte Aufweitungsstrecke erhöht. Bleibt ein Passagiersitz der Gruppe an seinem ursprünglichen Ort, muss der sich direkt daran anschließende Passagiersitz um eine Strecke verschoben werden, die genau der Aufweitungsstrecke des Sitzabstandes entspricht. Hierdurch rückt der dann verschobene Passagiersitz dichter an den nächsten Passagiersitz in dieser Gruppe auf, der folglich um die ursprüngliche Strecke zu verschieben ist, um den ursprünglichen Sitzabstand einzunehmen. Zur Aufweitung dessen Sitzabstandes muss folglich die Aufweitungsstrecke noch einmal hinzugefügt werden, damit auch dieser Passagiersitz einen vergrößerten Sitzabstand erfährt. Der dann weiter nachfolgende Passagiersitz muss folglich um ein Dreifaches der Aufweitungsstrecke verschoben werden usw. Die Ordnungszahl des betreffenden Passagiersitzes entspricht folglich der Reihenfolge der Passagiersitze, die zu verschieben sind. Der nur um die Aufweitungsstrecke zu verschiebende Passagiersitz weist folglich die Ordnungszahl 1 auf, der nachfolgende die Ordnungszahl 2 usw. Eine Sitzabstandsaufweitung kann folglich nicht unbegrenzt erfolgen, da der Platz innerhalb der Kabine des Transportmittels begrenzt ist.

Eine Gruppe von Passagiersitzen, die eine Sitzabstandsaufweitung erfahren können, kann vorteilhaft zwischen drei und zwölf Passagiersitzen aufweisen. Ein Bauraum von beispielhaft zwölf Zoll kann durch dichtes und annähernd bündiges Aufschieben eines Passagiersitzes auf einen anderen Passagiersitz bei einer ursprünglich großzügigen Bestuhlungsdichte erreicht werden, so dass bei einer Gruppe von zwölf Passagiersitzen eine Aufweitung der Sitzabstände von jeweils einem Zoll erreicht werden kann. Der Passagiersitz, auf den sich andere Passagiersitze dicht aufschieben, bleibt dann ungenutzt. Für eine Gruppe von drei Passagiersitzen könnte eine deutlich großzügigere Sitzabstandsaufweitung erfolgen, gleichzeitig bietet eine solche geringe Gruppengröße auch eine individuelle Sitzabstandsaufweitung bei einer ursprünglich recht engen Bestuhlungsdichte.

Wie vorangehend dargestellt, kann bei einer Sitzabstandsaufweitung ein Passagiersitz in einer Gruppe von Passagiersitzen ungenutzt bleiben. Es ist vorteilhaft, wenn eine Gruppe einen herkömmlichen Passagiersitz aufweist, der direkt mit der Sitzschiene verbindbar ist und keine positionsvariable Einrichtung besitzt. Ein solcher Passagiersitz ist stets prädestiniert, bei einer Sitzabstandsaufweitung ungenutzt zu bleiben. Alternativ dazu kann dieser Passagiersitz auch bei einer Sitzabstandsaufweitung gänzlich aus der Kabine ausgebaut oder zusammengeklappt werden, so dass der ursprünglich von diesem Passagiersitz eingenommene Bauraum für alle anderen Passagiersitze der Gruppe frei wird.

Weiter ist denkbar, dass die die positionsvariable Einrichtung zusätzlich dazu ausgebildet ist, die Haltevorrichtung selektiv in einer dritten Position an der Aufnahmeeinrichtung zu arretieren oder zu lösen und bei gelöster Haltevorrichtung eine Bewegung der Haltevorrichtung zwischen der ersten Position, der zweiten und der dritten Position zu erlauben. Dies kann insbesondere durch ein Schienensegment realisiert sein, welches zwischen einer ersten Position und einer zweiten Position auch eine dritte Position bereitstellt.

Die Erfindung betrifft ferner eine Kabine für ein Transportmittel, aufweisend einen Fußboden, mindestens eine in oder an dem Fußboden angeordnete Sitzschiene und eine auf der Sitzschiene gebildete Anordnung von Passagiersitzen, die mit einem vorangehend dargestellten Passagiersitzsystem gebildet sind.

Die Kabine kann mindestens eine Gruppe von Passagiersitzen aufweisen, wobei ein Passagiersitz der Gruppe keine positionsvariable Einrichtung aufweist, direkt an der mindestens einen Sitzschiene angeordnet ist und bei Aufweitung von Sitzabständen der übrigen Passagiersitze der Gruppe an seiner Position verbleibt oder aus der Kabine entfernbar ist.

Schließlich betrifft die Erfindung ein Flugzeug, aufweisend einen Flugzeugrumpf mit einer darin ausgebildeten, vorangehend dargestellten Kabine.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. la zeigt einen Passagiersitz bzw. ein Passagiersitzsystem, das einen Passagiersitz ausbildet, in einer schematischen Seitenansicht.
Fig. 1b zeigt eine alternative Variante für eine Bewegung zwischen einer ersten und einer zweiten Position.
Fig. 2 zeigt eine Gruppe von Passagiersitzen in einer vergleichenden Seitenansicht mit fest eingestelltem Sitzabstand und durch Ausrüstung mit einer positionsvariablen Einrichtung mit variablem Sitzabstand.
Fig. 3 zeigt eine Gruppe von Passagiersitzen in einer Kabine eines Flugzeugs in einer Seitenansicht.
Fig. 4 zeigt ein Flugzeug mit einem Rumpf und einer darin ausgebildeten Kabine nach Fig. 3.
Fig. 5a bis 5c zeigen das in Fig. 1b gezeigte Prinzip in einer anderen Darstellung.
Fig. 6a und 6b zeigen Arretiermittel für das vordere Sitzbein und den hinteren Sitzfuß.
Fig. 7 zeigt eine Bewegung des Sitzgestells mit einer daran angeordneten Gelenkstange.
Fig. 8a bis 9b zeigen weitere Details der Arretiermittel aus Fig. 6a und 6b.

### DETAILLIERTE DARSTELLUNG EXEMPLARISCHER AUSFÜHRUNGSFORMEN

Fig. la zeigt ein Passagiersitzsystem 2 mit einem sehr schematisch dargestellten Passagiersitz 4, der ein Sitzgestell 6 aufweist, welches einen Aufnahmeabschnitt 8 zur Aufnahme von Sitzeinrichtungen 10 und 12 in Form eines Sitzpolsters und einer Rückenlehne besitzt. Tragelemente 14 und 16 des Sitzgestells 6 in Form hinterer Sitzfüße 14 und vorderer Sitzbeine 16 werden über eine positionsvariable Einrichtung 18 mit einem Fußboden 20 bzw. einer daran, darin oder darauf installierten Sitzschiene 22 mechanisch gekoppelt, so dass das Sitzgestell 6 fest mit der Sitzschiene 22 verbunden ist.

Eine positionsvariable Einrichtung weist eine Basis 24 auf, welche eine Auflagefläche 26 besitzt, die auf die Sitzschiene 22 auflegbar ist. Über eine Arretiereinrichtung 28 mit ersten Arretiermitteln 30 ist die Basis 24 daran arretierbar. Die dargestellten ersten Arretiermittel 30 können in Form von üblichen, pilzartigen Verriegelungselementen mit einer tellerförmigen Aufweitung und einem Schaft realisiert sein, wie sie zur Verriegelung von Passagiersitzen üblicherweise an Sitzschienen des Typs "Douglas-Rail" verwendet werden.

Das erfindungsgemäße Passagiersitzsystem 2 eignet sich besonders als Nachrüstlösung für bereits bestehende Kabinen von Transportmitteln und insbesondere Verkehrsflugzeugen, so dass die Ausstattung in der gezeigten Form ein sehr vorteilhaftes Ausführungsbeispiel sein kann. Selbstverständlich sind auch andere Formen von Sitzschienen und anderen geeigneten Arretiermitteln denkbar, die nicht den hier gezeigten Arretiermitteln entsprechen, ohne den Kerngedanken der Erfindung zu verlassen.

Die Basis 24 weist eine Aufnahmeeinrichtung 32 zur lösbaren Aufnahme einer Haltevorrichtung 34 auf, die an einer ersten Position P1 oder an einer zweiten Position P2 befestigbar ist. Die Aufnahmeeinrichtung kann etwa eine Schiene bzw. ein Schienensegment 19 aufweisen, an dem die Haltevorrichtung 34 verschiebbar ist. Die Haltevorrichtungen 34, die an einem rückwärtigen Ende des Passagiersitzes 4 angeordnet sind, könnten über zweite Arretiermittel 36 mit der Aufnahmeeinrichtung 32 derart verbindbar sein, dass eine weitere Verschiebung der jeweiligen Haltevorrichtung 34 nicht möglich ist.

Die Basis 24 weist an ihrem rückwärtigen Ende einen ersten Anschlag 38 auf, an ihrem vorderen Ende einen Anschlag 40. Für ein Bewegen der Haltevorrichtung 34 nach vorne bis zu einem Flächenkontakt mit dem Anschlag 40 wird die zweite Position eingenommen. Bei einer Bewegung nach hinten wird die erste Position eingenommen, wenn die Haltevorrichtung 34 mit dem Anschlag 38 in einen Flächenkontakt gerät. Gleiches gilt für die Haltevorrichtung 34 am vorderen Ende des Passagiersitzes 4.

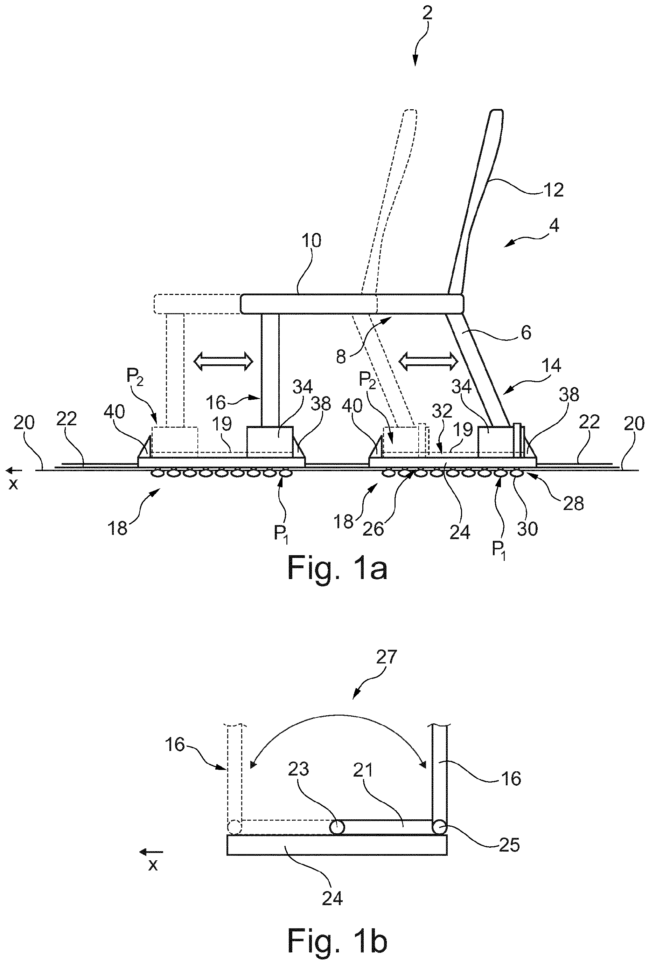

In einer in Fig. 1b gezeigten alternativen Ausgestaltung einer positionsvariablen Einrichtung 27 wird eine Gelenkstange 21 um ein an der Basis 24 befestigtes Gelenk 23 schwenkbar gelagert und kann in zwei um 180° auseinander liegende Positionen verschwenkt werden. An einem von dem Gelenk 23 entfernten Ende 25 ist hier ein vorderes Sitzbein 16 als Tragelement gekoppelt, so dass die Gelenkstange 21 als Haltevorrichtung dient. Folglich kann das vordere Sitzbein 16 präzise in zwei unterschiedliche Positionen gebracht werden. Dort kann eine Arretierung durch nicht dargestellte Arretiermittel erfolgen. Diese Variante hat den besonderen Vorteil, dass durch die Verwendung einer Gelenkstange 21 bereits Kräfte in Längsrichtung x aufnehm- bzw. übertragbar sind.

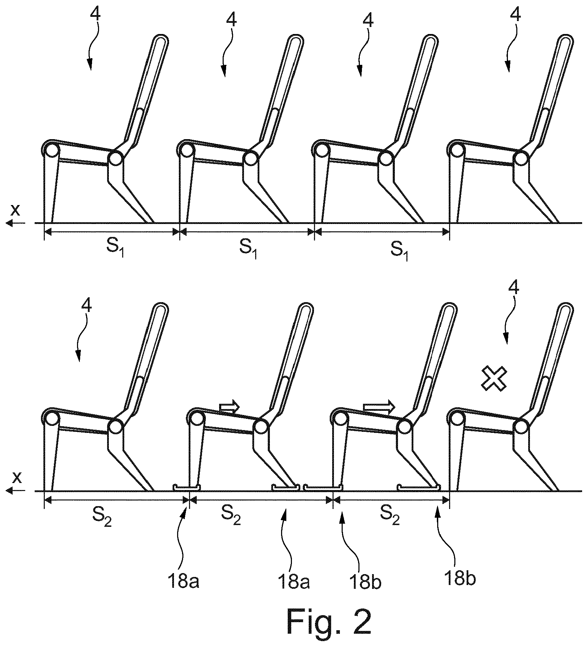

Durch das Passagiersitzsystem 2 können Passagiersitze bereitgestellt werde, die eine bedarfsweise Aufweitung eines Sitzabstandes zwischen mehreren hintereinander angeordneten Passagiersitzen 4 erlauben. Hier wird in Fig. 2 in einem oberen Teil eine Reihe von insgesamt vier Passagiersitzen 4 dargestellt, die einen relativ geringen Sitzabstand S1 aufweisen. Durch Verwendung von positionsvariablen Einrichtungen 18a und 18b, wie im unteren Teil der Fig. 2 dargestellt, können die Sitzabstände der drei vorderen Passagiersitze 4 aufgeweitet werden, indem der zweite Passagiersitz von links beispielhaft um 3 Zoll von dem vorderen Passagiersitz 4 entfernt wird, der weiter nachfolgende Passagiersitz 4 um 6 Zoll. Der letzte Passagiersitz 4 in der Reihe weist nun einen um 6 Zoll geringeren Sitzabstand auf als vorher und sollte daher ungenutzt bleiben.

Die positionsvariablen Einrichtungen 18a und 18b sind an ihren vorbestimmten Verschiebeweg angepasst, so dass die vordere positionsvariable Einrichtung 18a um 3 Zoll kürzer ausgeführt ist als die positionsvariable Einrichtung 18b des dahinter liegenden Passagiersitzes 4.

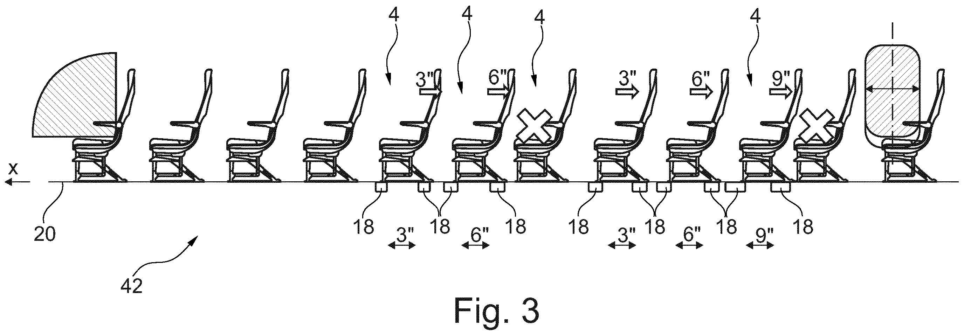

Fig. 3 zeigt eine Kabine 42 mit einer Reihe von Passagiersitzen 4, deren Sitzabstände bedarfsweise aufgeweitet werden können. Hier wird beispielhaft vorgesehen, eine Verschiebung von 3, 6 und 9 Zoll von drei hintereinander liegenden Passagiersitzen vorzunehmen, wobei ein dahinter liegender, fünfter Passagiersitz aufgrund des zu geringen Sitzabstandes an dieser Stelle unbenutzbar wird.

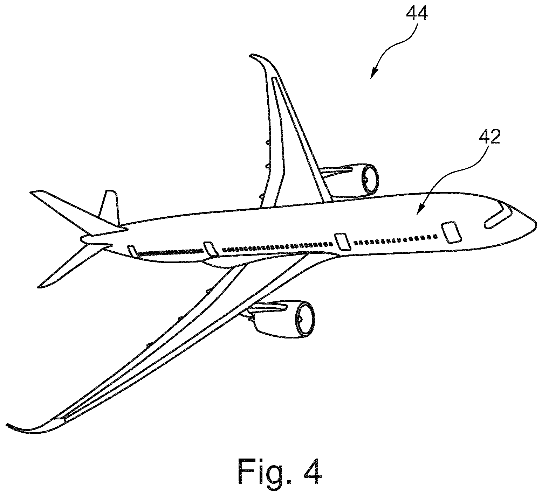

Fig. 4 zeigt ein Flugzeug 44 mit einer darin angeordneten Kabine 42 gemäß der vorangehenden Darstellung.

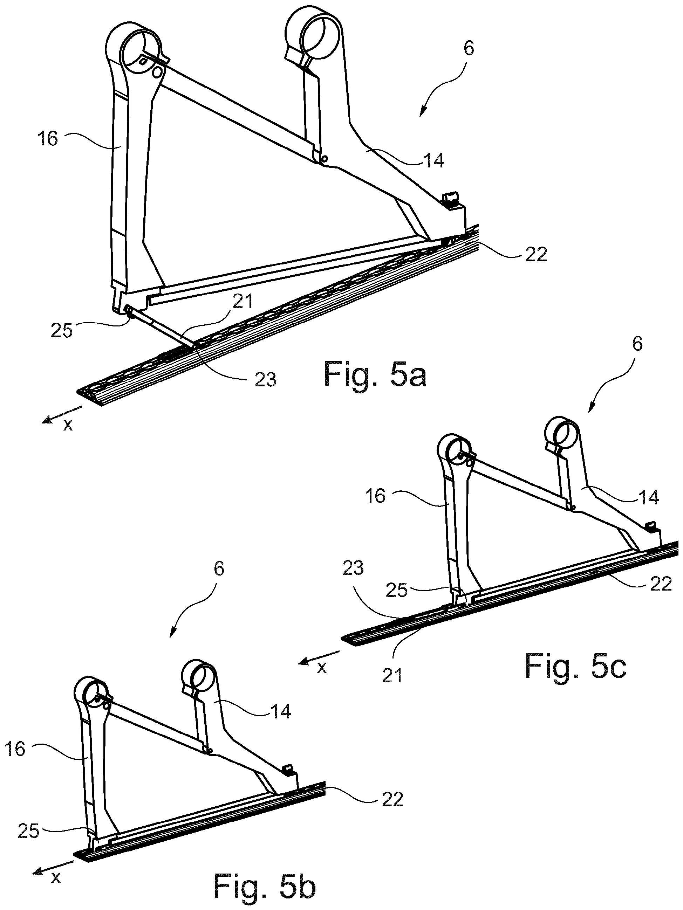

Fig. 5a bis 5c zeigen das Prinzip aus Fig. 1b in einer etwas anschaulicheren Darstellung. In Fig. 5a ist das Sitzgestell 6 in einer Übergangsposition zwischen zwei Relativpositionen entlang der Schiene 22 dargestellt, bei der das vordere Sitzbein 16 etwas von der Schiene 22 abgehoben ist, während der hintere Sitzfuß auf der Schiene 22 aufliegt und sich die Gelenkstange 21 schräg von der Schiene zu dem Gelenk 23 hin erstreckt. Fig. 5b zeigt eine nach vorne, d.h. in x-Richtung gewandte Positionierung des Sitzgestells 6, während Fig. 5c eine nach hinten, d.h. entgegen der x-Richtung, gewandte Positionierung des Sitzgestells 6.

Durch die Verwendung der Gelenkstange 21 kann präzise der Abstand zwischen den beiden möglichen Positionen des Sitzgestells 6 auf der Sitzschiene 22 vorgegeben werden. Es ist denkbar, zum Ändern der Position des Sitzgestells 6 das vordere Sitzbein 16 leicht anzuheben und leicht in die gewünschte Richtung zu schieben, so dass, bedingt durch die Führung mit Hilfe der Gelenkstange 21, das Sitzgestell 6 aufgrund der Schwerkraft die Bewegung unterstützt, bis die gewünschte Position erreicht ist. Zum Anheben des vorderen Sitzbeins 16 kann beispielsweise hinter dem betreffenden Sitzgestell 6 eine Oberkante der Rückenlehne 12 nach hinten gezogen werden, nachdem eine entsprechende Arretierung des vorderen Sitzbeins 16 gelöst ist.

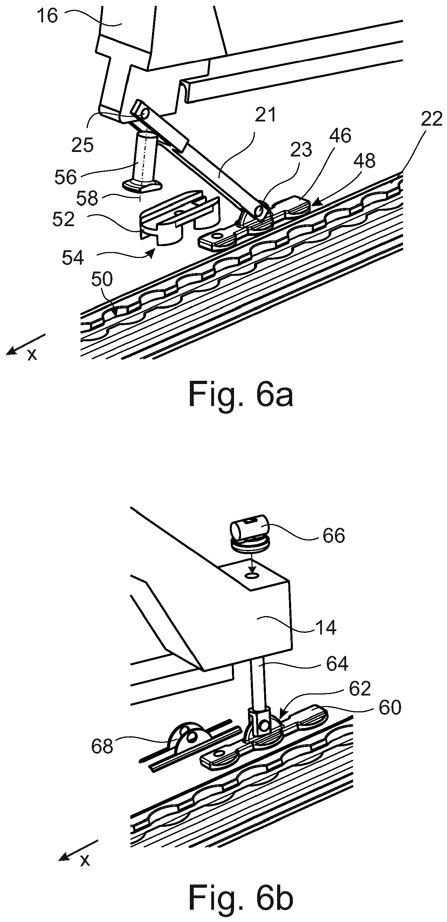

Fig. 6a zeigt eine mögliche Variante zur Befestigung des Gelenks 23 der Gelenkstange 21 an der Schiene 22. Hierzu wird beispielhaft ein Einleger 46 mit exemplarisch drei Vorsprüngen 48 vorgesehen, die mit Öffnungen 50 der Schiene 22 korrespondieren, so dass der Einleger 46 in einen inneren Hohlraum der Schiene 22 einlegbar ist. Durch ein Konterelement 52, welches ebenfalls Vorsprünge 54 aufweist, die in die Öffnungen 50 der Schiene 22 einführbar sind, gleichzeitig aber auch ein Formschluss mit dem Einleger 46 hervorgerufen werden kann, ist der Einleger 46 in der Schiene 22 arretierbar. Die Kombination aus Einleger 46 und Konterelement 52 kann folglich eine Basis im Sinne der Erfindung sein. Zusätzlich kann zum Sichern des vorderen Sitzbeins 16 des Sitzgestells 6 ein zusätzliches Arretiermittel 56 eingesetzt werden, welches nur schematisch gezeigt ist und durch Drehen um eine Längsachse 58 an der Schiene 22 verriegelbar ist. Durch eine drehbare Lagerung an dem vorderen Sitzbein 16 wird folglich eine lösbare formschlüssige Verbindung zwischen dem vorderen Sitzbein 16 und der Schiene 22 hergestellt.

Der hintere Sitzfuß 14 kann auf eine ähnliche Weise an der Schiene 22 arretiert werden. Hierzu wird exemplarisch ein Einleger 60 eingesetzt, der eine drehbare Nocke 62 umfasst, welche über eine gelenkig angeordnete Verbindungswelle 64 und ein Bedienelement 66 bei Bedarf gedreht werden kann. Durch Drehen kann die Nocke 62 in einem Hohlraum der Schiene 22 verriegelt oder gelöst werden. Zum Verhindern eines unbeabsichtigten Verdrehens kann ein Konterelement 68 in die Schiene 22 eingesetzt werden. Die gelenkige Verbindung mit der Verbindungswelle 64 erlaubt eine leichte Rotation des hinteren Sitzfußes 14 um eine horizontale, quer zu der Schiene 22 verlaufende Achse beim Anheben des vorderen Sitzbeins 16. In einem gelösten Zustand der Nocke 62 kann der hintere Sitzfuß entlang der Sitzschiene 22 geführt werden. Die Anordnung an einem oder mehreren Sitzfüßen 14 kann daher auch als positionsvariable Einrichtung verstanden werden, während die Anordnung an den vorderen Sitzbeinen 16 vielmehr als Haltevorrichtung im Sinne der Erfindung zu verstehen ist.

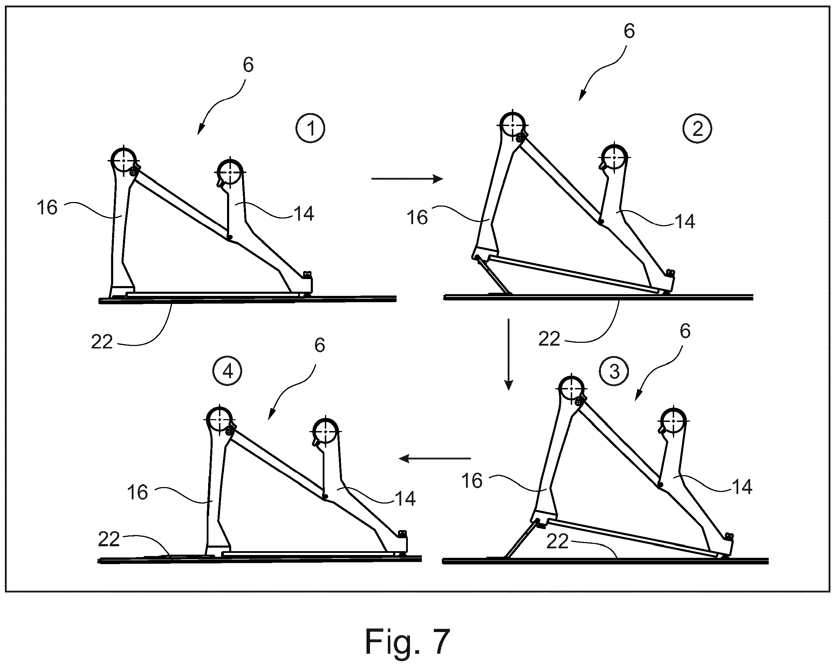

Fig. 7 zeigt in vier aufeinanderfolgenden Darstellungen 1) bis 4) eine Änderung der Position eines Sitzgestells 6 an einer Schiene 22, wie vorangehend beschrieben. In der Teildarstellung 1) erfolgt das Anheben des vorderen Sitzbeins 16, in 2) der Beginn des Verschiebens in die gewünschte Richtung, in 3) das schwerkraftunterstützte Weiterführen der Bewegung des Sitzgestells und in 4) das Erreichen der Endposition.

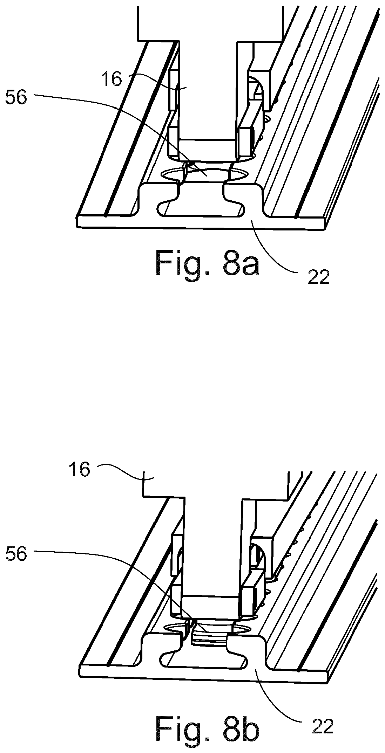

Fig. 8a und 8b zeigen die Rotation des Arretiermittels 56 des vorderen Sitzbeins 16 zur Befestigung (Fig. 8a) und zum Lösen (Fig. 8b) des Sitzbeins 16 von der Schiene 22.

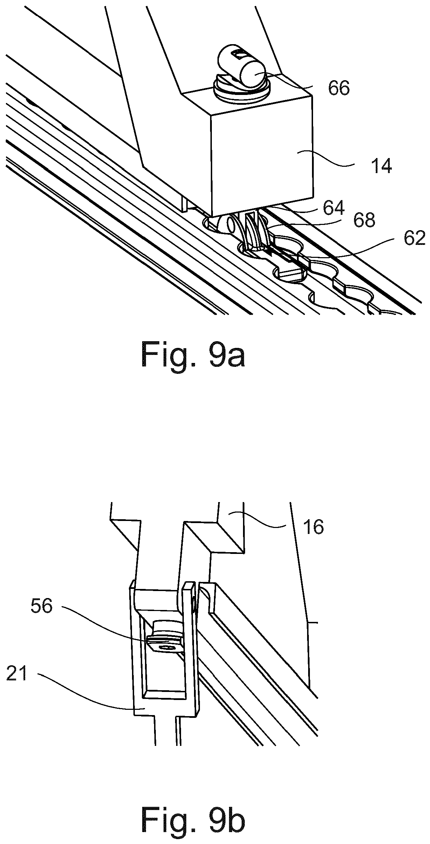

Fig. 9a zeigt eine Arretierposition der Nocke 62 in der Schiene mit eingesetztem Konterelement 68. In Fig. 9b ist gleichzeitig ein angehobenes vorderes Sitzbein 16 dargestellt, bei dem das Arretierelement 56 in einer Entriegelstellung ist. Die Nocke 62 des hinteren Sitzfußes 14 kann auch bei der in Fig. 9a gezeigten Arretierposition eine leichte Rotation um eine horizontale Schwenkachse, die quer zu der Sitzschiene 22 verläuft, tolerieren, da die Verbindungswelle 64 um diese herum schwenken kann und das Konterelement 68 dem nicht entgegenwirkt.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Passagiersitzsystem (2) für eine Kabine (42) eines Transportmittels (44), aufweisend:
- mehrere hintereinander angeordnete Passagiersitze (4) mit jeweils einem Sitzgestell (6), das einen Aufnahmeabschnitt (8) zur Aufnahme von Sitzeinrichtungen (10, 12) besitzt und mehrere Tragelemente (14, 16) zur Kopplung mit einem Fußboden (20) aufweist und
- für jeden Passagiersitz (4) mindestens eine von dem Aufnahmeabschnitt (8) beabstandete positionsvariable Einrichtung (18, 18a, 18b, 27) zum Koppeln eines Tragelements (14, 16) mit einer Sitzschiene (22), mit einer Basis (24) und einer Haltevorrichtung (21, 34), die lösbar an der Basis (24) befestigbar ist und mit einem Tragelement (14, 16) des Sitzgestells (6) koppelbar ist,
wobei die Basis (24) eine Auflagefläche (26) zum Auflegen auf die Sitzschiene (22) in der Kabine (42) des Transportmittels (44) und mindestens eine Arretiereinrichtung (28) zum Arretieren der Basis (24) an der Sitzschiene (22) aufweist,
wobei die Basis (24) eine Aufnahmeeinrichtung (32) zur lösbaren Aufnahme der Haltevorrichtung (21, 34) aufweist,
wobei die positionsvariable Einrichtung (18, 18a, 18b, 27) dazu ausgebildet ist, die Haltevorrichtung (21, 34) selektiv in einer ersten Position oder einer zweiten Position an der Aufnahmeeinrichtung (32) zu arretieren oder zu lösen und bei gelöster Haltevorrichtung (21, 34) eine Bewegung der Haltevorrichtung (21, 34) zwischen der ersten Position und der zweiten Position zu erlauben,
wobei die Basis (24) ein erstes Ende und ein zweites Ende aufweist, an denen jeweils ein Anschlag (38, 40) zum Definieren der ersten Position und der zweiten Position vorhanden ist, und
wobei sich der Abstand zwischen der ersten Position und der zweiten Position der positionsvariablen Einrichtungen (18, 18a, 18b, 27) an jedem Passagiersitz (4) von einem vordersten Passagiersitz (4) zu einem hintersten Passagiersitz (4) hin sukzessive vergrößert.

2. Passagiersitzsystem (2) nach Anspruch 1,
wobei die Aufnahmeeinrichtung (32) der Basis ein Schienensegment (19) aufweist und die Haltevorrichtung (21, 34) zum flächenbündigen Anordnen auf dem Schienensegment (19) ausgebildet ist.

3. Passagiersitzsystem (2) nach Anspruch 2,
wobei das Schienensegment (19) ein Gleitschienensegment ist, welches an einer von der Auflagefläche (26) der Basis (24) abgewandten Seite Rastöffnungen zum Aufnehmen von ersten Arretiermitteln (30) aufweist.

4. Passagiersitzsystem (2) nach Anspruch 2 oder 3,
wobei das Schienensegment (19) einen mindestens eine Hinterschneidung aufweisenden Profilquerschnitt aufweist und die Haltevorrichtung (21, 34) eine damit korrespondierend geformte Ausnehmung aufweist.

5. Passagiersitzsystem (2) nach einem der Ansprüche 1 bis 2,
wobei ein Gelenk (23) an der Basis (24) der Aufnahmeeinrichtung (32) angeordnet ist,
wobei eine Gelenkstange (21) als Haltevorrichtung (21, 34) um das Gelenk (23) schwenkbar gelagert ist,
wobei die Gelenkstange (21) zu zwei um 180° entgegengesetzten Positionen auf die Basis (24) klappbar ist,
wobei an einem von dem Gelenk (23) entfernten Ende (25) der Gelenkstange (21) das betreffende Tragelement (14, 16) des Sitzgestells (6) angekoppelt ist, sodass durch Schwenken der Gelenkstange (21) das betreffende Tragelement (14, 16) in zwei unterschiedliche Positionen bringbar ist.

6. Passagiersitzsystem (2) nach einem der vorhergehenden Ansprüche,
wobei die Arretiereinrichtung der Basis zweite Arretiermittel aufweist, die dazu ausgebildet sind, mit der Sitzschiene eine form- und/oder kraftschlüssige Verbindung einzugehen.

7. Passagiersitzsystem (2) nach einem der vorhergehenden Ansprüche,
wobei das Sitzgestell (6) vier Tragelemente (14, 16) aufweist, denen jeweils eine positionsvariable Einrichtung (18, 18a, 18b, 27) zugeordnet ist.

8. Passagiersitzsystem (2) nach einem der vorhergehenden Ansprüche,
aufweisend mindestens eine Gruppe von Passagiersitzen (4),
wobei der Abstand zwischen der ersten Position und der zweiten Position der mindestens einen positionsvariable Einrichtung (18, 18a, 18b, 27) für jeden Passagiersitz (4) der Gruppe um ein Vielfaches einer Strecke erhöht wird, die einer vorbestimmten Sitzabstandsaufweitung der Gruppe von Passagiersitzen (4) entspricht, wobei das jeweilige Vielfache einer Ordnungszahl des betreffenden Passagiersitzes (4) in der Gruppe entspricht.

9. Passagiersitzsystem (2) nach Anspruch 8,
wobei die Gruppe zwischen drei und zwölf Passagiersitze (4) aufweist.

10. Passagiersitzsystem (2) nach Anspruch 8 oder 9,
wobei die Gruppe ferner einen herkömmlichen Passagiersitz (4) aufweist, der direkt mit der Sitzschiene (22) verbindbar ist und keine positionsvariable Einrichtung (18, 18a, 18b, 27) besitzt.

11. Passagiersitzsystem (2) nach einem der Ansprüche 1 bis 4 und 6 bis 10, jedoch nicht Anspruch 5,
wobei die positionsvariable Einrichtung (18, 18a, 18b, 27) zusätzlich dazu ausgebildet ist, die Haltevorrichtung (21, 34) selektiv in einer dritten Position an der Aufnahmeeinrichtung (32) zu arretieren oder zu lösen und bei gelöster Haltevorrichtung (34) eine Bewegung der Haltevorrichtung (34) zwischen der ersten Position, der zweiten und der dritten Position zu erlauben.

12. Kabine (42) für ein Transportmittel (44), aufweisend
einen Fußboden (20),
mindestens eine in oder an dem Fußboden (20) angeordnete Sitzschiene (22) und
eine auf der Sitzschiene (22) gebildete Anordnung von Passagiersitzen (4), die mit einem Passagiersitzsystem (2) nach einem der Ansprüche 1 bis 11 gebildet sind.

13. Kabine (42) nach Anspruch 12,
aufweisend mindestens eine Gruppe von Passagiersitzen (4), wobei ein Passagiersitz (4) der Gruppe keine positionsvariable Einrichtung (18, 18a, 18b, 27) aufweist, direkt an der mindestens einen Sitzschiene (22) angeordnet ist und bei Aufweitung von Sitzabständen der übrigen Passagiersitze (4) der Gruppe an seiner Position verbleibt oder aus der Kabine (42) entfernbar ist.

14. Flugzeug (44), aufweisend einen Flugzeugrumpf mit einer darin ausgebildeten Kabine (42) nach Anspruch 12 oder 13.

## Claims

1. Passenger seat system (2) for a cabin (42) of a means of transportation (44), having:
- a plurality of passenger seats (4) which are disposed behind one another and have in each case one seat frame (6) that has a holding section (8) for receiving seat fittings (10, 12) and a plurality of supporting elements (14, 16) for coupling to a floor (20); and
- for each passenger seat (4) at least one variable-position device (18, 18a, 18b, 27), which for coupling a supporting element (14, 16) to a seat rail (22) is spaced apart from the holding section (8) and which has a base (24) and a retaining device (21, 34) that is able to be releasably fastened to the base (24) and able to be coupled to a supporting element (14, 16) of the seat frame (6) ;
wherein the base (24) has a bearing surface (26) for placement on the seat rail (22) in the cabin (42) of the means of transportation (44), and at least one locking device (28) for locking the base (24) to the seat rail (22);
wherein the base (24) has a holding device (32) for releasably receiving the retaining device (21, 34); wherein the variable-position device (18, 18a, 18b, 27) is configured to lock the retaining device (21, 34) selectively in a first position or a second position on the holding device (32), or to release the retaining device (21, 34), and, when the retaining device (21, 34) is released, to allow movement of the retaining device (21, 34) between the first position and the second position;
wherein the base (24) has a first end and a second end, on each of which a stop (38, 40) for defining the first position and the second position is present; and
wherein the spacing between the first position and the second position of the variable-position devices (18, 18a, 18b, 27) on each passenger seat (4) successively increases from a frontmost passenger seat (4) to a rearmost passenger seat (4).

2. Passenger seat system (2) according to Claim 1,
wherein the holding device (32) of the base has a rail segment (19), and the retaining device (21, 34) is configured for disposal on the rail segment (19) in a manner flush with the surface.

3. Passenger seat system (2) according to Claim 2,
wherein the rail segment (19) is a slide rail segment which on a side that faces away from the bearing surface (26) of the base (24) has latching openings for receiving first locking means (30).

4. Passenger seat system (2) according to Claim 2 or 3,
wherein the rail segment (19) has a profile cross section having at least one undercut, and the retaining device (21, 34) has a recess shaped to correspond thereto.

5. Passenger seat system (2) according to one of Claims 1 to 2,
wherein a joint (23) is disposed on the base (24) of the holding device (32),
wherein a toggle link (21) as a retaining device (21, 34) is mounted so as to be pivotable about the joint (23);
wherein the toggle link (21) is able to be folded onto the base (24) to two positions that are opposed by 180°;
wherein the respective supporting element (14, 16) of the seat frame (6) is coupled to an end (25) of the toggle link (21) that is remote from the joint (23), such that the respective supporting element (14, 16) is able to be moved to two dissimilar positions by pivoting the toggle link (21).

6. Passenger seat system (2) according to one of the preceding claims,
wherein the locking device of the base has two locking means which, conjointly with the seat rail, are configured to establish a form-fitting and/or force-fitting connection.

7. Passenger seat system (2) according to one of the preceding claims,
wherein the seat frame (6) has four supporting elements (14, 16), each of which being assigned one variable-position device (18, 18a, 18b, 27).

8. Passenger seat system (2) according to one of the preceding claims,
having at least one group of passenger seats (4), wherein the spacing between the first position and the second position of the at least one variable-position device (18, 18a, 18b, 27) for each passenger seat (4) of the group is increased by a multiple of a distance which corresponds to a predetermined seat spacing increase of the group of passenger seats (4), wherein the respective multiple corresponds to an ordinal number of the respective passenger set (4) in the group.

9. Passenger seat system (2) according to Claim 8,
wherein the group has between three and twelve passenger seats (4).

10. Passenger seat system (2) according to Claim 8 or 9,
wherein the group furthermore has a conventional passenger seat (4) which is able to be connected directly to the seat rail (22) and does not have any variable-position device (18, 18a, 18b, 27).

11. Passenger seat system (2) according to one of Claims 1 to 4, and 6 to 10, but not Claim 5,
wherein the variable-position device (18, 18a, 18b, 27) is additionally configured to lock the retaining device (21, 34) selectively in a third position on the holding device (32), or to release the retaining device (21, 34), and, when the retaining device (34) is released, to allow movement of the retaining device (34) between the first position, the second and the third position.

12. Cabin (42) for a means of transportation (44), having
a floor (20);
at least one seat rail (22) disposed in or on the floor (20); and
an assembly of passenger seats (4) which are formed on the seat rail (22) and are formed by way of a passenger seat system (2) according to one of Claims 1 to 11.

13. Cabin (42) according to Claim 12,
having at least one group of passenger seats (4), wherein one passenger seat (4) of the group does not have any variable-position device (18, 18a, 18b, 27), is disposed directly on the at least one seat rail (22), and, when seat spacings of the other passenger seats (4) of the group are increased, remains in its position or is removable from the cabin (42).

14. Aircraft (44), having an aircraft fuselage having a cabin (42) according to Claim 12 or 13 configured therein.

## Revendications

1. Système formant siège de passager (2) destiné à une cabine (42) d'un moyen de transport (44), ledit système comportant :
- une pluralité de sièges de passager (4) disposés les uns derrière les autres et comprenant chacun un cadre de siège (6) qui comporte une portion de réception (8) destinée à recevoir des mécanismes de siège (10, 12) et une pluralité d'éléments de support (14, 16) destinés à être accoupler à un plancher (20) et
- pour chaque siège de passager (4), au moins un mécanisme à position variable (18, 18a, 18b, 27) distant de la portion de réception (8) et destiné à accoupler un élément de support (14, 16) à un rail de siège (22), ledit mécanisme à position variable comprenant une base (24) et un dispositif de retenue (21, 34) qui peut être fixé de manière amovible à la base (24) et qui peut être accouplé à un élément de support (14, 16) du cadre de siège (6),
la base (24) comportant une surface d'appui (26) destinée à être placée sur le rail de siège (22) dans la cabine (42) du moyen de transport (44) et au moins un mécanisme de blocage (28) destiné à bloquer la base (24) sur le rail de siège (22),
la base (24) comportant un mécanisme de réception (32) destiné à recevoir de manière amovible le dispositif de retenue (21, 34),
le mécanisme à position variable (18, 18a, 18b, 27) étant conçu pour bloquer ou libérer le dispositif de retenue (21, 34) sélectivement dans une première position ou une deuxième position sur le mécanisme de réception (32) et, lorsque le dispositif de retenue (21, 34) est libéré, pour permettre le mouvement du dispositif de retenue (21, 34) entre la première position et la deuxième position,
la base (24) comportant une première extrémité et une deuxième extrémité sur chacune desquelles une butée (38, 40) est prévue pour définir la première position et la deuxième position, et
la distance entre la première position et la deuxième position des mécanismes à position variable (18, 18a, 18b, 27) sur chaque siège de passager (4) augmentant successivement depuis un siège de passager avant (4) en direction d'un siège de passager arrière (4).

2. Système formant siège de passager (2) selon la revendication 1,
le mécanisme de réception (32) de la base comportant un segment de rail (19) et le dispositif de retenue (21, 34) étant conçu pour être disposé à fleur de surface sur le segment de rail (19).

3. Système formant siège de passager (2) selon la revendication 2,
le segment de rail (19) étant un segment de rail glissant qui comporte sur un côté opposé à la surface d'appui (26) de la base (24) des ouvertures d'encliquetage destinées à recevoir des premiers moyens de blocage (30).

4. Système formant siège de passager (2) selon la revendication 2 ou 3,
le segment de rail (19) présentant une section transversale profilée qui comporte au moins une contredépouille et le dispositif de retenue (21, 34) comportant un évidement de forme correspondante.

5. Système formant siège de passager (2) selon l'une des revendications 1 et 2,
une articulation (23) étant disposée sur la base (24) du mécanisme de réception (32),
une barre d'articulation (21) étant montée en tant que dispositif de retenue (21, 34) de manière pivotante autour de l'articulation (23),
la barre d'articulation (21) étant repliable sur la base (24) en deux positions opposées de 180°,
l'élément de support concerné (14, 16) du cadre de siège (6) étant accouplé à une extrémité (25) de la barre d'articulation (21) qui est éloignée de l'articulation (23) de sorte que le pivotement de la barre d'articulation (21) permet d'amener l'élément de support concerné (14, 16) dans deux positions différentes.

6. Système formant siège de passager (2) selon l'une des revendications précédentes,
le mécanisme de blocage de la base comportant des deuxièmes moyens de blocage qui sont conçus pour réaliser avec le rail de siège une liaison en force et/ou par complémentarité de formes.

7. Système formant siège de passager (2) selon l'une des revendications précédentes,
le cadre de siège (6) comportant quatre éléments de support (14, 16) à chacun desquels est associé un mécanisme à position variable (18, 18a, 18b, 27).

8. Système formant siège passager (2) selon l'une des revendications précédentes, ledit système comprenant au moins un groupe de sièges de passager (4),
la distance entre la première position et la deuxième position de l'au moins un mécanisme à position variable (18, 18a, 18b, 27) pour chaque siège de passager (4) du groupe étant augmentée d'un multiple d'un intervalle qui correspond à une extension de l'écartement prédéterminé entre les sièges du groupe de sièges de passager (4), le multiple respectif correspondant à un nombre ordinal du siège de passager concerné (4) dans le groupe.

9. Système formant siège de passager (2) selon la revendication 8,
le groupe comportant entre trois et douze sièges de passager (4).

10. Système formant siège de passager (2) selon la revendication 8 ou 9,
le groupe comportant en outre un siège de passager classique (4) qui peut être relié directement au rail de siège (22) et qui ne possède pas de dispositif à position variable (18, 18a, 18b, 27).

11. Système formant siège de passager (2) selon l'une des revendications 1 à 4 et 6 à 10, mais pas la revendication 5,
le mécanisme à position variable (18, 18a, 18b, 27) étant en outre conçu pour bloquer ou libérer sélectivement le dispositif de retenue (21, 34) dans une troisième position sur le mécanisme de réception (32) et, lorsque le dispositif de retenue (34) est libéré, pour autoriser un mouvement du dispositif de retenue (34) entre la première position, la deuxième et la troisième position.

12. Cabine (42) destinée à un moyen de transport (44), ladite cabine comportant
un plancher (20),
au moins un rail de siège (22) disposé dans ou sur le plancher (20) et
un ensemble de sièges de passager (4) qui est formé sur le rail de siège (22) et qui est formé d'un système formant siège de passager (2) selon l'une des revendications 1 à 11.

13. Cabine (42) selon la revendication 12, comportant au moins un groupe de sièges de passager (4),
un siège de passager (4) du groupe ne comportant pas de mécanisme à position variable (18, 18a, 18b, 27), étant disposé directement sur au moins un rail de siège (22) et restant dans sa position ou pouvant être retiré de la cabine (42) lorsque l'écartement entre les autres sièges de passager (4) du groupe s'étend.

14. Aéronef (44) comportant un fuselage d'aéronef dans lequel est formée une cabine (42) selon la revendication 12 ou 13.
